(19) Europäisches Patentamt
European Patent Office
Office européen des brevets

(11) **EP 2 031 474 B1**

(12) **FASCICULE DE BREVET EUROPEEN**

(45) Date de publication et mention
de la délivrance du brevet:
**15.09.2010  Bulletin 2010/37**

(51) Int Cl.:
***G05B 23/02*** *(2006.01)*

(21) Numéro de dépôt: **08160245.0**

(22) Date de dépôt: **11.07.2008**

(54) **Procédé et dispositif de diagnostic de pannes multiples survenues dans des matériels**

Verfahren und Vorrichtung zur Diagnose mehrfacher Fehler in Materialen

Method and device for diagnosing multiple failures occurring in equipment

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.08.2007  FR 0757195**

(43) Date de publication de la demande:
**04.03.2009  Bulletin 2009/10**

(73) Titulaire: **Peugeot Citroën Automobiles Société Anonyme**
**78140 Velizy Villacoublay (FR)**

(72) Inventeur: **Charkaoui, M. Nasser**
**92250, La Garenne Colombes (FR)**

(74) Mandataire: **Vigand, Régis Louis Michel**
**PSA Peugeot Citroën**
**Propriété Industrielle (LG081)**
**18, Rue des Fauvelles**
**92250 La Garenne Colombes (FR)**

(56) Documents cités:
**EP-A- 1 418 481**

- **KRISHNASWAMY S ET AL: "Logic Circuits Testing for Transient Faults" TEST SYMPOSIUM, 2005. EUROPEAN TALLINN, ESTONIA 22-25 MAY 2005, PISCATAWAY, NJ, USA,IEEE, 22 mai 2005 (2005-05-22), pages 102-107, XP010801330 ISBN: 0-7695-2341-2**
- **TAE-GYU CHANG ET AL: "On-board dynamics failure detection of the two-motor-driven electric vehicle system" VEHICULAR TECHNOLOGY CONFERENCE, 2000. IEEE VTS FALL VTC 2000. 52ND SEPT. 24-28, 2000, PISCATAWAY, NJ, USA, IEEE, vol. 5, 24 septembre 2000 (2000-09-24), pages 2047-2053, XP010522151 ISBN: 0-7803-6507-0**

**Description**

L'invention concerne les diagnostics de pannes qui surviennent dans des matériels, et plus précisément les dispositifs et procédés chargés d'effectuer des diagnostics de pannes à partir d'une base de données de pannes.

On entend ici par « panne » un ensemble d'au moins un défaut de fonctionnement, permanent ou intermittent (ou fugitif), et pouvant faire l'objet d'une détection aboutissant à la génération par une fonction de diagnostic de message (s) d'erreur regroupé(s) dans un fichier de données. Un défaut est dit permanent s'il ne disparaît qu'après une intervention de réparation. Un défaut est dit fugitif s'il apparaît et disparaît de façon aléatoire ou cyclique sans intervention de réparation.

Par ailleurs, on entend ici par « matériel » tout type d'équipement muni d'au moins un élément pouvant faire l'objet d'au moins un défaut de fonctionnement tel que défini ci-dessus. Il pourra par exemple s'agir, bien que non limitativement, d'un véhicule automobile.

Dans certains matériels, comme par exemple les véhicules automobiles, l'électronique dite « embarquée » occupe une place de plus en plus importante. Ainsi, dans l'application précitée, on la retrouve notamment au niveau du moteur, du châssis, des organes de sécurité et dans l'habitacle (en particulier pour gérer l'aérothermie). Il est donc fréquent de voir coexister au sein d'un même véhicule plusieurs dizaines de calculateurs (ou microprocesseurs). Afin de faciliter la gestion d'un si grand nombre de calculateurs, il a été proposé de mettre en oeuvre une technique d'échange de données par multiplexage. Pour ce faire, on peut par exemple constituer un réseau global à partir de plusieurs sous-réseaux, par exemple de type CAN (« Controller Area Network »), connectés entre eux par l'intermédiaire d'un calculateur central (maître).

Le multiplexage est particulièrement utile, mais hélas il induit certains inconvénients. Ainsi, il peut être à l'origine de problèmes de sûreté de fonctionnement et peut rendre difficile la détermination de l'origine des pannes du fait de la propagation dans le réseau global des symptômes de panne due aux interdépendances entre calculateurs et fonctions (fréquemment réparties). Il peut également s'avérer défaillant du fait d'incompatibilités de fonctionnement entre des calculateurs provenant d'équipementiers différents.

Bien qu'il ne soit pas le seul dans ce cas (cela peut être également dû à une stratégie de diagnostic embarqué faiblement robuste), le multiplexage peut être également à l'origine de l'allumage permanent à tort de certains voyants du tableau de bord (c'est ce que l'on appelle les faux défauts) ou du dysfonctionnement par intermittence de certaines fonctions (c'est ce que l'on appelle les défauts intermittents ou fugitifs).

EP 1418481 divulgue un procédé de diagnostic de pannes multiples.

Afin de permettre aux techniciens de déterminer les origines des pannes, on met à leur disposition des fichiers, parfois dits « log », qui contiennent des messages d'erreur générés par des fonctions de diagnostic embarquées consécutivement à la détection ou la disparition de défauts de fonctionnement (ou dysfonctionnements), permanents ou intermittents.

Les contenus de ces fichiers log sont cependant souvent difficiles à exploiter du fait qu'ils sont analysés au moyen de méthodes basiques de diagnostic de pannes et de bases de données de défauts. Cela résulte notamment du fait qu'il n'existe pas de relations bijectives entre les codes de défaut (répertoriés dans les bases de données de défauts) et les pannes réelles du fait des interdépendances fonctionnelles, et donc qu'une panne peut être représentée par un ensemble de codes de défaut. Cela résulte également du fait que les fichiers log peuvent être « pollués » par de fausses alertes et sont en outre de type multidimensionnel.

Afin de faciliter le travail des techniciens, on a proposé de mettre à leur disposition des dispositifs (ou outils) de diagnostic de pannes couplés aux base(s) de données de pannes. Ainsi, le document brevet WO 2006/127051 propose de collecter dans une base de données, par exemple via l'Internet, les informations décrivant les pannes pouvant survenir dans des matériels, puis d'effectuer une analyse statistique de données stockées afin de synthétiser les données correspondant à une panne par un nombre très limité de vecteurs d'informations conservant les propriétés statistiques principales des données initiales. Ce type d'analyse statistique améliore la situation, mais de façon insuffisante car dans bon nombre de cas il fournit plus aux techniciens des pistes pour déterminer l'origine réelle des pannes que de véritables diagnostics leur indiquant l'origine réelle des pannes. En outre ce type d'analyse statistique n'est pas bien adapté aux situations de pannes multiples, notamment lorsque plusieurs codes de défaut sont communs à plusieurs pannes simples.

L'invention a donc pour but d'améliorer la situation dans le cas de pannes multiples. On entend ici par « panne multiple » le fait d'avoir simultanément plusieurs pannes simples.

Elle propose à cet effet un procédé, dédié au diagnostic de pannes multiples survenues dans des matériels et représentées par des fichiers de données, et consistant, en présence d'un vecteur dit « forme » $x_i$ ($x_i = (x_{i1},..., x_{iN})$) résultant de la transformation d'un fichier de données issu d'un matériel en panne :

     i) à projeter ce vecteur forme $x_i$ dans des sous-espaces $EP_j$ (avec j = 1 à M) associés respectivement à M pannes simples identifiées $\omega_j$ pouvant survenir dans le matériel en panne et constitués chacun par un sous-ensemble de variables $x_{ik}^j$ choisies parmi N variables ($x_{ik}$) associées respectivement à N codes de défaut $CD_{ik}$ pouvant survenir

dans le matériel en panne, afin d'obtenir M sous-vecteurs formes $x_i^j$, puis

ii) à calculer des valeurs représentatives de similarités entre chaque sous-vecteur forme $x_i^j$ et des vecteurs dits « prototype » faisant partie d'une base de données de pannes simples X et représentatifs de la panne simple identifiée $\omega_j$ de même indice j et de l'ensemble de M-1 pannes simples $\omega_{j'}$ (avec j'≠j) excluant cette panne simple identifiée $\omega_j$, et

iii) à déduire de ces valeurs de similarité au moins une panne simple du matériel en panne.

Le procédé selon l'invention peut comporter d'autres caractéristiques qui peuvent être prises séparément ou en combinaison, et notamment :

- au i) les valeurs de similarité peuvent être les résultats de mesures de dissimilarité entre chaque sous-vecteur forme $x_i^j$ et des vecteurs prototypes correspondants ;

  ➢ en présence d'une base de données de pannes X contenant M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_{j'}$ (avec j'≠j) excluant chacun l'une des M pannes identifiées $\omega_j$, on peut effectuer au ii), pour chaque panne identifiée $\omega_j$, une première mesure de dissimilarité entre le sous-vecteur forme $x_i^j$ et le premier vecteur prototype $P1_j$ associé à cette panne identifiée $\omega_j$, afin d'obtenir une première valeur de similarité $S1_j$, et une seconde mesure de dissimilarité entre le sous-vecteur forme $x_i^j$ et le second vecteur prototype $P2_j$ associé à cette panne identifiée $\omega_j$, afin d'obtenir une seconde valeur de similarité $S2_j$, puis au iii) on peut retenir chaque première valeur de similarité $S1_j$ qui est inférieure à la seconde valeur de similarité $S2_j$ correspondante et qui correspond alors à une panne du matériel en panne ;

    • au iii), en présence de premiers vecteurs prototypes $P1_j$ constitués, d'une part, d'un premier vecteur $a1_j$ dont chaque variable $a1_{jk}$ constituante est représentative de la valeur de variable $x_{ik}$ (k = 1 à N) qui est majoritaire dans les vecteurs formes $x_i$ ($x_i = (x_{i1},..., x_{iN})$) considérés d'un premier sous-ensemble $X1_j$, qui correspondent à la panne $\omega_j$, et d'autre part, d'un second vecteur $\varepsilon1_j$ dont chaque variable $\varepsilon1_{jk}$ constituante est représentative de la variation des valeurs de variable $x_{ik}$ du premier sous-ensemble $X1_j$ par rapport à la variable $a1_{jk}$ correspondante, et en présence de seconds vecteurs prototypes $P2_j$ constitués, d'une part, d'un premier vecteur $a2_j$ dont chaque variable $a2_{jk}$ constituante est représentative de la valeur de variable $x_{ik}$ qui est majoritaire dans les vecteurs formes $x_i$ considérés d'un second sous-ensemble $X2_j$, qui ne correspondent pas à la panne $\omega_j$, et d'autre part, d'un second vecteur $\varepsilon2_j$ dont chaque variable $\varepsilon2_{jk}$ constituante est représentative de la variation des valeurs de variable $x_{ik}$ du second sous-ensemble $X2_j$ par rapport à la variable $a2_{jk}$ correspondante, on peut déterminer chaque première valeur de similarité $S1_j$ en effectuant une somme pondérée des différences entre les variables de même indice k du sous-vecteur forme $x_i^j$ et du premier vecteur $a1_j$, et on peut déterminer chaque seconde valeur de similarité $S2_j$ en effectuant une somme pondérée des différences entre les variables de même indice k du sous-vecteur forme $x_i^j$ et du premier vecteur $a2_j$;

      o chaque première mesure de dissimilarité peut par exemple être définie par la relation

      $$ds1(x_i^{\,j}, P1_j) = \sum_{k \,/\, x_{ik}^{\,j} \in EP_j} \left( \ln \frac{1 - \varepsilon1_{jk}}{\varepsilon1_{jk}} \right) \left| x_{ik}^{\,j} - a1_{jk} \right|,$$ et chaque seconde mesure de dissimilarité peut par exemple être définie par la relation

      $$ds2(x_i^{\,j}, P2_j) = \sum_{k \,/\, x_{ik}^{\,j} \in EP_j} \left( \ln \frac{1 - \varepsilon2_{jk}}{\varepsilon2_{jk}} \right) \left| x_{ik}^{\,j} - a2_{jk} \right| \; ;$$

- en cas de réception d'un fichier de données, on peut transformer ce dernier en un vecteur forme $x_i$ constitué d'un ensemble de N variables $x_{ik}$ ($x_i = (x_{i1},..., x_{iN})$, avec k = 1 à N) associées respectivement aux N codes de défaut $CD_{ik}$ pouvant survenir dans le matériel en panne ;

- chaque variable $x_{ik}$ peut prendre des première et seconde valeurs représentatives respectivement de la détection au moins une fois et de l'absence de détection du code de défaut $CD_{ik}$ dans ledit fichier ;

➢ chaque sous-espace $EP_j$ peut par exemple regrouper des variables $x_{ik}^j$ définies par la relation

$$x_{ik}^{\;j} = \left\{ x_{ik}, k = 1 \, \grave{a} \, N \middle| a1_{jk} = 1, (1 - \varepsilon 1_{jk}) > \frac{1}{2} \right\}$$ et donc ayant une première valeur représentative de la détection au moins une fois du code de défaut $CD_{ik}$ dans les fichiers de données $JDD_i$ correspondant à la panne $\omega_j$ avec une probabilité supérieure à 0,5 quand la panne identifiée $\omega_j$ est présente.

L'invention propose également un dispositif, dédié au diagnostic de pannes multiples survenues dans des matériels et représentées par des fichiers de données, et comprenant des moyens de traitement chargés, en présence d'un vecteur forme $x_i$ ($x_i = (x_{i1},..., X_{iN})$) résultant de la transformation d'un fichier de données issu d'un matériel en panne :

- de projeter ce vecteur forme $x_i$ dans des sous-espaces $EP_j$ (avec j = 1 à M) associés respectivement à M pannes simples identifiées $\omega_j$ pouvant survenir dans le matériel en panne et constitués chacun par un sous-ensemble de variables $x_{ik}^j$ choisies parmi N variables ($x_{ik}$) associées respectivement à N codes de défaut $CD_{ik}$ pouvant survenir dans le matériel en panne, afin d'obtenir M sous-vecteurs formes $x_i^j$, puis
- de calculer des valeurs représentatives de similarités entre chaque sous-vecteur forme $x_i^j$ et des vecteurs prototypes faisant partie d'une base de données de pannes simples X et représentatifs de la panne simple identifiée $\omega_j$ de même indice j et de l'ensemble des M-1 pannes $\omega_{j'}$, (avec j'≠j) excluant cette panne simple identifiée $\omega_j$, et
- de déduire de ces valeurs de similarité au moins une panne simple du matériel en panne.

Le dispositif selon l'invention peut comporter d'autres caractéristiques qui peuvent être prises séparément ou en combinaison, et notamment :

- ses moyens de traitement peuvent être chargés de calculer des mesures de dissimilarité entre chaque sous-vecteur forme $x_i^j$ et des vecteurs prototypes correspondants, les résultats de ces calculs étant les valeurs de similarité ;

  ➢ en présence d'une base de données de pannes X contenant M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_{j'}$ (avec j'≠j) excluant chacun l'une des M pannes identifiées $\omega_j$, ses moyens de traitement peuvent être chargés i) d'effectuer pour chaque panne identifiée $\omega_j$, d'une part, une première mesure de dissimilarité entre le sous-vecteur forme $x_i^j$ et le premier vecteur prototype $P1_j$ associé à cette panne identifiée $\omega_j$, afin d'obtenir une première valeur de similarité $S1_j$, et d'autre part, une seconde mesure de dissimilarité entre le sous-vecteur forme $x_i^j$ et le second vecteur prototype $P2_j$ associé à cette panne identifiée $\omega_j$, afin d'obtenir une seconde valeur de similarité $S2_j$, et ii) de retenir chaque première valeur de similarité $S1_j$ qui est inférieure à la seconde valeur de similarité $S2_j$ correspondante, et qui correspond à une panne du matériel en panne ;

  • en présence de premiers vecteurs prototypes $P1_j$ constitués, d'une part, d'un premier vecteur $a1_j$ dont chaque variable $a1_{jk}$ constituante est représentative de la valeur de variable $x_{ik}$ (k = 1 à N) qui est majoritaire dans les vecteurs formes $x_i$ ($x_i = (x_{i1},..., x_{iN})$) considérés d'un premier sous-ensemble $X1_j$, qui correspondent à la panne $\omega_j$, et d'autre part, d'un second vecteur $\varepsilon 1_j$ dont chaque variable $\varepsilon 1_{jk}$ constituante est représentative de la variation des valeurs de variable $x_{ik}$ du premier sous-ensemble $X1_j$ par rapport à la variable $a1_{jk}$ correspondante, et en présence de seconds vecteurs prototypes $P2_j$ constitués, d'une part, d'un premier vecteur $a2_j$ dont chaque variable $a2_{jk}$ constituante est représentative de la valeur de variable $x_{ik}$ qui est majoritaire dans les vecteurs formes $x_i$ considérés d'un second sous-ensemble $X2_j$, qui ne correspondent pas à la panne $\omega_j$, et d'autre part, d'un second vecteur $\varepsilon 2_j$ dont chaque variable $\varepsilon 2_{jk}$ constituante est représentative de la variation des valeurs de variable $x_{ik}$ du second sous-ensemble $X2_j$ par rapport à la variable $a2_{jk}$ correspondante, ses moyens de traitement peuvent être chargés i) de déterminer chaque première valeur de similarité $S1_j$ en effectuant une somme pondérée des différences entre les variables de même indice k du sous-vecteur forme $x_i^j$ et du premier vecteur $a1_j$, et ii) de déterminer chaque seconde valeur de similarité $S2_j$ en effectuant une somme pondérée des différences entre les variables de même indice k du sous-vecteur forme $x_i^j$ et du premier vecteur $a2_j$;

  o ses moyens de traitement peuvent être chargés de déterminer i) chaque première mesure de dissimilarité à partir de la relation $ds1(x_i^{\ j}, P1_j) = \displaystyle\sum_{k \,/\, x_{ik}^{\ j} \in EP_j} \left( \ln \dfrac{1 - \varepsilon 1_{jk}}{\varepsilon 1_{jk}} \right) \left| x_{ik}^{\ j} - a1_{jk} \right|$, et ii) chaque seconde mesure de dissimilarité à partir de la relation

$$ds2(x_i^{\ j}, P2_j) = \sum_{k \,/\, x_{ik}^{\ j} \in EP_j} \left( \ln \frac{1 - \varepsilon 2_{jk}}{\varepsilon 2_{jk}} \right) \left| x_{ik}^{\ j} - a2_{jk} \right| \; ;$$

- en cas de réception d'un fichier de données, ses moyens de traitement peuvent être chargés de transformer ce fichier de données en un vecteur forme $x_i$ constitué d'un ensemble de N variables $x_{ik}$ ($x_i = (x_{i1},..., x_{iN})$, avec k = 1 à N) associées respectivement aux N codes de défaut $CD_{ik}$ pouvant survenir dans le matériel en panne ;
- chaque variable $x_{ik}$ peut prendre des première et seconde valeurs représentatives respectivement de la détection au moins une fois et de l'absence de détection du code de défaut $CD_{ik}$ dans le fichier ;

  ➢ chaque sous-espace $EP_j$ peut par exemple regrouper des variables $x_{ik}^{\ j}$ définies par la relation $x_{ik}^{\ j} = \left\{ x_{ik}, k = 1 \text{ à } N \middle| a1_{jk} = 1, (1 - \varepsilon 1_{jk}) > \dfrac{1}{2} \right\}$ et donc ayant une première valeur représentative de la détection au moins une fois du code de défaut $CD_{ik}$ dans les fichiers de données $JDD_i$ correspondant à la panne $\omega_j$ avec une probabilité supérieure à 0,5 quand la panne identifiée $\omega_j$ est présente.

De préférence, la base de données est obtenue par un procédé de génération de base(s) de données représentatives de pannes survenues dans des matériels ($V_i$), consistant i) à stocker des fichiers de données ($JDD_i$) issus de matériels ($V_i$) et représentatifs de défauts survenus dans certains de leurs éléments, puis ii) à transformer chaque fichier de données ($JDD_i$) en un vecteur dit « forme » $x_i$, et iii) à construire pour chacune de M pannes identifiées $\omega_j$ des vecteurs dits « prototypes » à partir des vecteurs formes $x_i$, de manière à constituer une base de données X contenant des vecteurs prototypes représentatifs des M pannes identifiées $\omega_j$ et de M ensembles de M-1 pannes $\omega_{j'}$ (avec j'≠j) excluant chacun l'une des M pannes identifiées $\omega_j$. Préférentiellement, au ii) on transforme chaque fichier de données ($JDD_i$) en un vecteur forme $x_i$ constitué d'un ensemble de N variables $x_{ik}$ ($x_i = (x_{i1},.... x_{iN})$, avec k = 1 à N) associées respectivement à N codes de défaut $CD_{ik}$ pouvant survenir dans le matériel ($V_i$) correspondant, chaque variable $x_{ik}$ pouvant prendre des première et seconde valeurs représentatives respectivement de la détection au moins une fois et de l'absence de détection du code de défaut $CD_{ik}$ dans ledit fichier ($JDD_i$). Avantageusement, au ii) on détermine parmi les vecteurs formes $x_i$ ceux qui ne correspondent qu'à une unique panne puis parmi ces derniers ceux qui correspondent à une panne $\omega_j$ (j = 1 à M) choisie parmi les M pannes identifiées $\omega_j$ de manière à regrouper pour chaque panne identifiée $\omega_j$ dans des premier $X1_j$ et second $X2_j$ sous-ensembles, les vecteurs formes $x_i$ qui respectivement correspondent et ne correspondent pas à cette panne $\omega_j$, et en ce qu'au iii) on construit pour chaque panne identifiée $\omega_j$ des premier $P1_j$ et second $P2_j$ vecteurs prototypes à partir des vecteurs formes $x_i$ qui sont respectivement contenus dans lesdits premier $X1_j$ et second $X2_j$ sous-ensembles, de manière à constituer une base de données de pannes X contenant M premiers vecteurs prototypes $P1_j$ représentatifs respectivement des M pannes $\omega_j$ identifiées et M seconds vecteurs prototypes $P2_j$ représentatifs respectivement de M ensembles de M-1 pannes $\omega_{j'}$ (avec j'≠j) excluant chacun l'une des M pannes identifiées $\omega_j$.

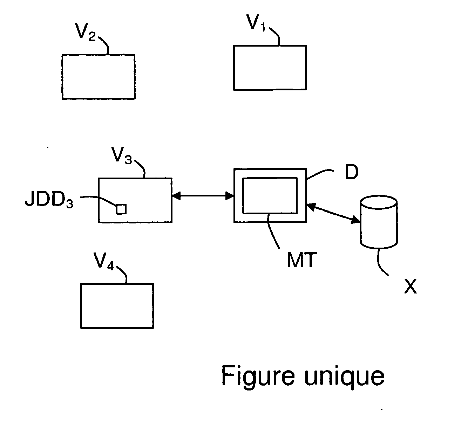

D'autres caractéristiques et avantages de l'invention apparaîtront à l'examen de la description détaillée ci-après, et du dessin annexé, sur lequel l'unique figure illustre de façon schématique et fonctionnelle un exemple de réalisation d'un dispositif (ou outil) de diagnostic de pannes multiples selon l'invention recevant un fichier log d'un matériel.

Le dessin annexé pourra non seulement servir à compléter l'invention, mais aussi contribuer à sa définition, le cas échéant.

L'invention a pour but de faciliter la détermination de l'origine réelle des pannes multiples qui surviennent dans des matériels.

Dans ce qui suit, on considère à titre d'exemple non limitatif que les matériels ($V_i$) sont des véhicules automobiles. Mais, l'invention n'est pas limitée à ce type de matériel. Elle concerne en effet tout type de matériel (ou équipement) comportant au moins un élément, pouvant faire l'objet d'au moins un défaut de fonctionnement détectable, et d'au moins un module de diagnostic embarqué, chargé au moins de générer des messages d'erreurs consécutivement à la détection ou la disparition de défauts de fonctionnement (ou dysfonctionnements), permanents ou intermittents. Il est rappelé que ces messages d'erreur sont regroupés dans un fichier de données $JDD_i$, dit « log », qui est stocké dans le matériel $V_i$

correspondant et qui peut être extrait en vue d'une analyse par un dispositif (ou outil) de diagnostic de pannes externe.

Un fichier log JDD$_i$ peut être considéré comme un ensemble d'enregistrements correspondant chacun à un message d'erreur, généralement constitué de trois champs principaux. Le premier champ principal, appelé « apparition/ disparition », indique si le message résulte de la détection ou de la disparition d'un défaut de fonctionnement. Il peut par exemple comprendre le signe « + » (apparition) ou « - » (disparition). Le deuxième champ principal, appelé « code de défaut » CD$_{ik}$, est un code généralement de type hexadécimal qui désigne le défaut détecté. Le troisième champ principal, parfois appelé « libellé », décrit le défaut détecté.

Un fichier log JDD$_i$ peut être schématiquement représenté sous la forme d'un tableau du type de celui donné ci-dessous :

| Apparition / disparition | Code de défaut | Libellé |
|---|---|---|
| + | 7159 | Défaut information niveau d'huile moteur invalide |
| + | 7173 | Défaut information température huile moteur invalide |
| + | 7362 | Voyant inhibition sac passager |
| - | 7173 | Défaut information température huile moteur invalide |
| - | 7159 | Défaut information niveau d'huile moteur invalide |
| + | 7173 | Défaut information température huile moteur invalide |
| + | F01 D | Défaut absence de communication avec le calculateur suspension |
| - | 7173 | Défaut information température huile moteur invalide |
| + | F011 | Défaut BSI muette sur le réseau CAN carrosserie |

On considère dans ce qui suit que l'on a identifié M pannes $\omega_j$, avec j = 1 à M, pour un modèle de véhicules V$_i$. Par ailleurs, on considère dans ce qui suit qu'il existe N codes de défaut CD$_{ik}$, avec k = 1 à N, pour le modèle de véhicules V$_i$ ici considéré. De plus, on dispose d'une table de correspondance entre chacune des M pannes $\omega_j$ et un ensemble d'au moins un code de défaut CD$_{ik}$.

Afin d'atteindre le but précité, l'invention propose un procédé et un dispositif D dédiés au diagnostic de pannes multiples survenues dans des matériels V$_i$, ici des véhicules automobiles. Dans l'exemple non limitatif illustré, seuls quatre véhicules V$_1$ à V$_4$ (i = 1 à 4) ont été représentés, mais l'invention n'est pas limitée à ce nombre. Elle concerne en effet n'importe quel nombre de véhicules, dès lors qu'il est au moins égal à un (1).

Un dispositif D selon l'invention comprend au moins un module de traitement MT chargé, en présence d'un vecteur dit « forme » x$_i$ (x$_i$ = (x$_{i1}$,...., x$_{iN}$)), qui résulte de la transformation d'un fichier de données JDD$_i$ issu d'un véhicule en panne V$_i$, par exemple V$_3$ de projeter ce vecteur forme x$_i$ dans des sous-espaces EP$_j$ (avec j = 1 à M) qui sont associés respectivement aux M pannes simples identifiées $\omega_j$, qui sont susceptibles de survenir dans le matériel en panne V$_3$ (compte tenu de son modèle), et qui sont constitués chacun par un sous-ensemble de variables x$_{ik}^j$ choisies parmi N variables (x$_{ik}$) associées respectivement aux N codes de défaut CD$_{ik}$, afin d'obtenir M sous-vecteurs formes x$_i^j$ constitués respectivement des variables x$_{ik}^j$ (issues du vecteur forme x$_i$) définies par les sous-ensembles des sous-espaces EP$_j$ de même indice j.

On notera que les sous-espaces EP$_j$ ne sont pas disjoints et ont en général des dimensions (nombre de variables x$_{ik}^j$) différentes.

On comprendra en effet que la présence de plusieurs pannes simultanées peut engendrer un vecteur forme x$_i$ dont la « signature » est très proche de celle d'une panne différente de chacune des pannes simples considérées, ce qui fausserait le diagnostic. Or, la présence d'une panne simple identifiée $\omega_j$, est uniquement liée à la présence (ou l'activation) d'un ensemble d'au moins un code de défauts CD$_{ik}$ choisi. Par conséquent, si l'on considère que les pannes simples identifiées $\omega_j$ sont indépendantes les unes des autres, chacune d'entre elles peut être associée à un sous-espace EP$_j$ qui est constitué par le sous-ensemble de variables x$_{ik}^j$ qui sont associées aux codes de défaut CD$_{ik}$ qui la définit.

Une fois les projections terminées, le module de traitement MT calcule des valeurs qui représentent des similarités entre chaque sous-vecteur forme x$_i^j$ et des vecteurs dits « prototype » qui font partie de la base de données de pannes simples X et qui sont représentatifs de la panne simple identifiée $\omega_j$ de même indice j et de l'ensemble des M-1 pannes $\omega_{j'}$ (avec j'≠j) excluant cette panne simple identifiée $\omega_j$. Puis, il déduit de ces valeurs de similarité au moins une panne simple du matériel en panne V$_3$.

On comprendra qu'à un vecteur prototype représentant une panne simple $\omega_1$ correspond un autre vecteur prototype représentant l'ensemble des M-1 autres pannes simples $\omega_2$ à $\omega_M$, parfois dit panne complémentaire de cette

panne simple $\omega_1$ et donc différente de cette dernière. De même, à un vecteur prototype représentant une panne simple $\omega_2$ correspond un autre vecteur prototype représentant l'ensemble des M-1 autres pannes simples $\omega_1$, et $\omega_3$ à $\omega_M$, parfois dit panne complémentaire de cette panne simple $\omega_2$ et donc différente de cette dernière, et ainsi de suite.

Il est important de noter que la base de données de pannes simples X peut être externe au dispositif D (comme dans l'exemple non limitatif illustré), mais accessible à celui-ci, par exemple par le biais d'un réseau de communication (éventuellement via l'Internet), ou bien faire partie dudit dispositif D. Par ailleurs, une base de données de pannes X peut être soit spécifique à un unique modèle (de véhicules $V_i$), soit dédiée à plusieurs modèles (par exemple tous ceux d'une même marque, voire même de plusieurs marques). Une base de données de pannes X peut être stockée dans n'importe quel type de moyens de stockage, et notamment dans une mémoire.

Il est également important de noter que le dispositif D peut n'être agencé que pour recevoir des vecteurs formes $x_i$ résultant de la transformation de fichiers de données $JDD_i$ générés dans des véhicules en panne $V_i$. Mais, dans une variante, il peut être également agencé de manière à recevoir les fichiers de données $JDD_i$ générés dans des véhicules en panne $V_i$. Dans ce cas, son module de traitement MT est chargé transformer chaque fichier de données $JDD_i$ reçu en un vecteur forme $x_i$ constitué d'un ensemble de N variables $x_{ik}$ (soit $x_i = (x_{i1},..., x_{iN})$), associées respectivement aux N codes de défaut $CD_{ik}$ qui peuvent survenir dans un véhicule du même modèle que celui qui est en panne (ici $V_3$).

Chaque variable $x_{ik}$ d'un vecteur forme $x_i$ correspondant à l'un des N codes de défaut $CD_{ik}$, elle peut par exemple prendre soit une première valeur représentative de la détection au moins une fois du code de défaut $CD_{ik}$ dans le fichier $JDD_i$ (duquel est issu le vecteur forme $x_i$), soit une seconde valeur représentative de l'absence de détection du code de défaut $CD_{ik}$ dans ledit fichier $JDD_i$. On dit qu'une variable $x_{ik}$ est activée lorsque sa valeur au sein d'un vecteur forme $x_i$ est une première valeur et qu'elle est inactivée lorsque sa valeur au sein d'un vecteur forme $x_i$ est une seconde valeur.

On notera que si un même code de défaut $CD_{ik}$ peut être généré par P calculateurs différents (P≥2) au sein d'un même véhicule $V_i$, on prévoit alors P variables différentes $x_{ik}$ dans le vecteur forme $x_i$.

A titre d'exemple non limitatif, chaque variable $x_{ik}$ peut être binaire. Dans ce cas, sa première valeur peut être égale à 1, tandis que sa seconde valeur est égale à 0. Mais l'inverse est également possible. On comprendra qu'avec ce codage binaire, on ne prend en compte qu'une seule fois l'occurrence d'un évènement. En d'autres termes, un défaut intermittent n'est comptabilisé qu'une seule fois. Cette solution est actuellement préférée, car il est considéré que le nombre et/ou la fréquence d'occurrence d'un défaut n'apporte pas d'information supplémentaire. Mais, cette comptabilisation peut être envisagée.

Les valeurs de similarité qui sont utilisées par le module de traitement MT sont par exemple les résultats de mesures de dissimilarité entre chaque sous-vecteur forme $x_i^j$, résultant de la projection du vecteur forme $x_i$ sur les M sous-espaces $EP_j$, et des vecteurs prototypes qui sont contenus dans la base de données de pannes X (qui correspond au véhicule en panne $V_3$).

Il est avantageux que cette base de données de pannes X contienne pour chacune des M pannes $\omega_j$, identifiées pour le véhicule en panne $V_3$, un premier vecteur prototype $P1_j$ qui la représente, et un second vecteur prototype $P2_j$ qui représente l'ensemble des M-1 pannes simples $\omega_{j'}$ (avec $j'≠j$), parfois dit panne complémentaire de la panne simple identifiée $\omega_j$ (et donc qui diffère de cette dernière). En d'autres termes, la base de données de pannes X contient M premiers vecteurs prototypes $P1_j$ représentatifs respectivement des M pannes identifiées $\omega_j$ et M seconds vecteurs prototypes $P2_j$ représentatifs respectivement de M ensembles de M-1 pannes simples $\omega_{j'}$ (avec $j'≠j$) complémentaire chacun de l'une des M pannes simples identifiées $\omega_j$.

Par exemple, chaque premier vecteur prototype $P1_j$ est constitué d'un premier vecteur $a1_j$ et d'un second vecteur $\varepsilon1_j$.

Chaque premier vecteur $a1_j$ est par exemple constitué de N variables $a1_{jk}$, soit $a1_j = (a1_{j1}, a1_{j2},..., a1_{jN})$. Chaque variable $a1_{jk}$ représente par exemple la valeur de variable $x_{ik}$ qui est majoritaire au sein au sein des vecteurs formes $x_i$ considérés dans le premier sous-ensemble $X1_j$ et correspondant à la panne identifiée $\omega_j$. Par conséquent, chaque variable $a1_{jk}$ ne peut prendre que les mêmes valeurs que les variables $x_{ik}$ (par exemple 0 et 1). Par exemple, si $X1_j$ comprend cinq vecteurs formes ($n1_j=5$), et que trois valeurs de $x_{ik}$ dans ces vecteurs formes sont nulles (0) tandis que les deux autres valeurs sont égales à un (1), alors la valeur de variable $x_{ik}$ qui est majoritaire dans le sous-ensemble $X1_j$ est la valeur nulle (0) et par conséquent la valeur de $a1_{jk}$ est nulle (0).

Chaque second vecteur $\varepsilon1_j$ est par exemple constitué de N variables $\varepsilon1_{jk}$, soit $\varepsilon1_j = (\varepsilon1_{j1}, \varepsilon1_{j2},..., \varepsilon1_{jN})$. Chaque variable $\varepsilon1_{jk}$ représente la variation (ou dispersion) des valeurs de variable $x_{ik}$ par rapport à la variable $a1_{jk}$ correspondante. Par conséquent, lorsque les variables $a1_{jk}$ prennent les valeurs 0 et 1, les variables $\varepsilon1_{jk}$ ne peuvent prendre que des valeurs comprises entre 0 (par valeur supérieure) et ½ (par valeur inférieure). Par exemple, chaque variable $\varepsilon1_{jk}$ peut être déterminée à partir de la relation suivante :

$$\varepsilon 1_{jk} = \frac{1}{n1_j} * \sum_{x_i \in \omega_j} \left| x_{ik} - a1_{jk} \right|,$$

où $n1_j$ est égal au nombre de vecteurs formes $x_i$ dans le premier sous-ensemble $X1_j$ et «‖» désigne l'opérateur valeur absolue.

De même, chaque second vecteur prototype $P2_j$ est par exemple constitué d'un premier vecteur $a2_j$ et d'un second vecteur $\varepsilon 2_j$.

Chaque premier vecteur $a2_j$ est par exemple constitué de N variables $a2_{jk}$, soit $a2_j = (a2_{j1}, a2_{j2},..., a2_{jN})$. Chaque variable $a2_{jk}$ représente la valeur de variable $x_{ik}$ qui est majoritaire au sein des vecteurs formes $x_i$ considérés dans le second sous-ensemble $X2_j$ et correspondant à l'ensemble des M-1 pannes $\omega_{j'}$ (avec j'≠j), parfois dit panne complémentaire de la panne $\omega_j$. Par conséquent, chaque variable $a2_{jk}$ ne peut prendre que les mêmes valeurs que les variables $x_{ik}$ (par exemple 0 et 1). Par exemple, si $X2_j$ comprend cinq vecteurs formes ($n2_j$=5) et que deux valeurs de $x_{ik}$ dans ces vecteurs formes sont nulles (0), tandis que trois d'entre elles sont égales à un (1), alors la valeur de $x_{ik}$ qui est majoritaire est la valeur un (1) et par conséquent la valeur de $a1_{jk}$ est égal à un (1).

Chaque second vecteur $\varepsilon 2_j$ est par exemple constitué de N variables $\varepsilon 2_{jk}$, soit $\varepsilon 2_j = (\varepsilon 2_{j1}, \varepsilon 2_{j2},..., \varepsilon 2_{jN})$. Chaque variable $\varepsilon 2_{jk}$ représente la variation (ou dispersion) des valeurs de variable $x_{ik}$ par rapport à la variable $a2_{jk}$ correspondante. Par conséquent, lorsque les variables $a2_{jk}$ prennent les valeurs 0 et 1, les variables $\varepsilon 2_{jk}$ ne peuvent prendre que des valeurs comprises entre 0 (par valeur supérieure) et ½ (par valeur inférieure). Par exemple, chaque variable $\varepsilon 2_{jk}$ peut être déterminée à partir de la relation suivante :

$$\varepsilon 2_{jk} = \frac{1}{n2_j} * \sum_{x_i \notin \omega_j} \left| x_{ik} - a2_{jk} \right|,$$

où $n2_j$ est égal au nombre de vecteurs formes $x_i$ dans le second sous-ensemble $X2_j$.

En présence de vecteurs prototypes P1j et P2j du type de ceux décrits ci-avant, chaque sous-espace $EP_j$ regroupe des variables $x_{ik}{}^j$ qui peuvent être définies par la relation

$$x_{ik}{}^j = \left\{ x_{ik}, k = 1 \text{ à } N \middle| a1_{jk} = 1, (1 - \varepsilon 1_{jk}) > \frac{1}{2} \right\}.$$ Cette relation signifie que chaque sous-espace $EP_j$ regroupe des variables $x_{ik}{}^j$ qui présentent une première valeur représentative de la détection au moins une fois du code de défaut $CD_{ik}$ dans les fichiers $JDD_i$ correspondant à la panne $\omega_j$ avec une probabilité supérieure à 0,5 quand la panne identifiée $\omega_j$ est présente.

Lorsque la base de données de pannes X est constituée des M paires de vecteurs prototypes P1j et P2j, et que le module de traitement MT dispose de M sous-vecteurs formes $x_i{}^j$, il peut par exemple effectuer des première et seconde mesures de dissimilarité pour chaque panne identifiée $\omega_j$.

Chaque première mesure de dissimilarité se fait entre un sous-vecteur forme $x_i{}^j$ (du vecteur forme $x_i$) et le premier vecteur prototype $P1_j$ associé à la panne identifiée $\omega_j$ présentant le même indice j que le sous-vecteur forme $x_i{}^j$ considéré. Elle fournit une première valeur de similarité $S1_j$.

Par exemple, le module de traitement MT peut déterminer chaque première valeur de similarité $S1_j$ en effectuant une somme pondérée $ds1(x_i{}^j, P1_j)$ des différences entre les variables de même indice k du sous-vecteur forme $x_i{}^j$ et du premier vecteur $a1_j$. Pour ce faire, il peut par exemple utiliser la relation :

$$ds1(x_i{}^j, P1_j) = \sum_{k / x_{ik}{}^j \in EP_j} \left( \ln \frac{1 - \varepsilon 1_{jk}}{\varepsilon 1_{jk}} \right) \left| x_{ik}{}^j - a1_{jk} \right|,$$

où « In » désigne l'opérateur logarithme népérien.

Chaque seconde mesure de dissimilarité se fait entre un sous-vecteur forme $x_i{}^j$ (du vecteur forme $x_i$) et le second vecteur prototype $P2_j$ associé à la panne identifiée $\omega_j$ présentant le même indice j que le sous-vecteur forme $x_i{}^j$ considéré. Elle fournit une seconde valeur de similarité $S2_j$.

Par exemple, le module de traitement MT peut déterminer chaque seconde valeur de similarité S2$_j$ en effectuant une somme pondérée *ds2(x$_i^j$,P2$_j$)* des différences entre les variables de même indice k du sous-vecteur forme x$_i^j$ et du second vecteur a2$_j$. Pour ce faire, il peut par exemple utiliser la relation :

$$ds2(x_i^{\,j}, P2_j) = \sum_{k\,/\,x_{ik}^{\,j} \in EP_j} \left( \ln \frac{1 - \varepsilon 2_{jk}}{\varepsilon 2_{jk}} \right) \left| x_{ik}^{\,j} - a2_{jk} \right|.$$

Il est important de noter que les valeurs de similarité qui sont utilisées par le module de traitement MT ne sont pas obligatoirement les résultats des mesures de dissimilarité décrites ci-avant. Elles peuvent être également les résultats de mesures de dissimilarité différentes de celles décrites ci-avant. Notamment, on peut utiliser d'autres types de pondération que celui décrit ci-avant ( et $\left( \ln \dfrac{1 - \varepsilon 1_{jk}}{\varepsilon 1_{jk}} \right)$ et $\left( \ln \dfrac{1 - \varepsilon 2_{jk}}{\varepsilon 2_{jk}} \right)$ ). De même, elles peuvent être également les résultats de mesures de similarité.

Dans le cas de mesures de dissimilarité le module de traitement MT compare chaque première valeur de similarité S1$_j$ à la seconde valeur de similarité S2$_j$ correspondante, afin de déterminer celle qui est la plus petite. On comprendra en effet que si une première valeur de similarité S1$_j$ est inférieure à la seconde valeur de similarité S2$_j$ correspondante, cela signifie que le sous-vecteur forme x$_i^j$ analysé a une probabilité plus importante de correspondre à la panne identifiée ω$_j$ (représentée par le premier vecteur prototype P1$_j$) qu'aux M-1 pannes ω$_{j'}$ (avec j'≠j), parfois dites panne complémentaire de cette panne identifiée ω$_j$ (représentée par le second vecteur prototype P2$_j$).

Puis, le module de traitement MT retient chaque première valeur de similarité S1$_j$ qui est inférieure à la seconde valeur de similarité S2$_j$ correspondante. Par conséquent, le module de traitement MT désigne comme panne(s) du véhicule en panne V$_3$, celle(s) (parmi les M) qui correspond(ent) à la (l'une des) première(s) valeur(s) de similarité S1$_j$ retenue(s).

On notera que si l'on utilise des mesures de similarité à la place de mesures de dissimilarité, le module de traitement MT compare chaque première valeur de similarité S1$_j$ (résultat d'une première mesure de similarité) à la seconde valeur de similarité S2$_j$ correspondante (résultat d'une seconde mesure de similarité), afin de déterminer celle qui est la plus grande. On comprendra en effet que dans ce cas si une première valeur de similarité S1$_j$ est supérieure à la seconde valeur de similarité S2$_j$ correspondante, cela signifie que le sous-vecteur forme x$_i^j$ analysé à une probabilité plus importante de correspondre à la panne identifiée ω$_j$ (représentée par le premier vecteur prototype P1$_j$) qu'aux M-1 pannes ω$_{j'}$ (avec j'≠j), parfois dites panne complémentaire de cette panne identifiée ω$_j$ (représentée par le second vecteur prototype P2$_j$). De même, dans ce cas le module de traitement MT retient chaque première valeur de similarité S1$_j$ qui est supérieure à la seconde valeur de similarité S2$_j$ correspondante. Par conséquent, dans ce cas le module de traitement MT désigne comme panne(s) du véhicule en panne V$_3$, celle(s) (parmi les M) qui correspond(ent) à la (l'une des) première(s) valeur(s) de similarité S1$_j$ retenue(s).

On notera également que lorsqu'un vecteur forme x$_i$ aboutit à des premières valeurs de similarité S1$_j$ qui sont toutes supérieures ou inférieures (selon que l'on utilise respectivement des mesures de dissimilarité ou de similarité) aux secondes valeurs de similarité S2$_j$ correspondantes, ou bien que la première valeur de similarité retenue indique une similarité insuffisante avec les pannes identifiées ω$_j$, le module de traitement MT peut éventuellement stocker ce vecteur forme x$_i$ dans la base de données de vecteurs formes. En effet, ce cas de figure signifie que les pannes correspondant au vecteur forme x$_i$ ne sont pas représentées dans la base de données de pannes X. Le cas considéré doit alors être expertisé afin d'étudier les nouvelles pannes et la base de connaissances sera ensuite mise à jour afin de prendre en compte les nouvelles pannes étudiées. Cela se traduira par la définition de nouveaux premiers P1$_j$ et second P2$_j$ vecteurs prototypes qui seront associés aux nouvelles pannes identifiées.

Le dispositif de diagnostic de pannes multiples D selon l'invention, et notamment son module de traitement MT ainsi qu'éventuellement la base de données de pannes X (qu'il contient éventuellement), peut être réalisé sous la forme de circuits électroniques, de modules logiciels (ou informatiques), ou d'une combinaison de circuits et de logiciels.

L'invention peut être également vue sous l'angle d'un procédé, dédié au diagnostic de pannes multiples survenues dans des matériels V$_i$ et représentées par des fichiers de données JDD$_i$, et pouvant par exemple être mis en oeuvre par un dispositif de diagnostic de pannes multiples D du type de celui décrit ci-avant. Ce procédé reprenant les fonctionnalités principales et auxiliaires présentées ci-avant, seule sa combinaison de fonctionnalités principales est présentée ci-dessous.

Ce procédé consiste, en présence d'un vecteur forme x$_i$ (x$_i$ = (x$_{i1}$,..., x$_{iN}$)) résultant de la transformation d'un

fichier de données JDD$_i$ issu d'un matériel en panne V$_i$ :

i) à projeter ce vecteur forme x$_i$ dans des sous-espaces EP$_j$ (avec j = 1 à M) associés respectivement à M pannes simples identifiées ω$_j$ pouvant survenir dans le matériel en panne et constitués chacun par un sous-ensemble de variables x$_{ik}$$^j$ choisies parmi N variables (x$_{ik}$) associées respectivement à N codes de défaut CD$_{ik}$ pouvant survenir dans le matériel en panne, afin d'obtenir M sous-vecteurs formes x$_i$$^j$, puis

ii) à calculer des valeurs représentatives de similarités entre chaque sous-vecteur forme x$_i$$^j$ et des vecteurs prototypes faisant partie d'une base de données de pannes simples X et représentatifs de la panne simple identifiée ω$_j$ de même indice j et de l'ensemble de M-1 pannes simples ω$_{j'}$ (avec j'≠j) excluant cette panne simple identifiée ω$_j$, et

iii) à déduire de ces valeurs de similarité au moins une panne simple du matériel en panne.

L'invention ne se limite pas aux modes de réalisation de dispositif et de procédé de diagnostic de pannes multiples décrits ci-avant, seulement à titre d'exemple, mais elle englobe toutes les variantes que pourra envisager l'homme de l'art dans le cadre des revendications ci-après.

**Revendications**

1. Procédé de diagnostic de pannes multiples survenues dans des matériels (V$_i$) et représentées par des fichiers de données (JDD$_i$), **caractérisé en ce qu'**il consiste, en présence d'un vecteur dit « forme » x$_i$ (x$_i$ = (x$_{i1}$,..., x$_{iN}$)) résultant de la transformation d'un fichier de données (JDD$_i$) issu d'un matériel en panne (V$_i$), i) à projeter ledit vecteur forme x$_i$ dans des sous-espaces EP$_j$ (avec j = 1 à M) associés respectivement à M pannes simples identifiées ω$_j$ pouvant survenir dans ledit matériel en panne (V$_i$) et constitués chacun par un sous-ensemble de variables x$_{ik}$$^j$ choisies parmi N variables (x$_{ik}$) associées respectivement à N codes de défaut CD$_{ik}$ pouvant survenir dans ledit matériel en panne (V$_i$), de manière à obtenir M sous-vecteurs formes x$_i$$^j$, puis ii) à calculer des valeurs représentatives de similarités entre chaque sous-vecteur forme x$_i$$^j$ et des vecteurs dits « prototype » faisant partie d'une base de données de pannes simples X et représentatifs de la panne simple identifiée ω$_j$ de même indice j et de l'ensemble de M-1 pannes simples ω$_{j'}$ (avec j'≠j) excluant cette panne simple identifiée ω$_j$, et iii) à déduire desdites valeurs de similarité au moins une panne simple du matériel en panne (V$_i$).

2. Procédé selon la revendication 1, **caractérisé en ce qu'**au ii) lesdites valeurs de similarité sont les résultats de mesures de dissimilarité entre chaque sous-vecteur forme x$_i$$^j$ et des vecteurs prototypes correspondants.

3. Procédé selon la revendication 2, **caractérisé en ce qu'**en présence d'une base de données de pannes X contenant M premiers vecteurs prototypes P1$_j$ représentatifs respectivement des M pannes identifiées ω$_j$ et M seconds vecteurs prototypes P2$_j$ représentatifs respectivement de M ensembles de M-1 pannes simples ω$_{j'}$ (avec j'≠j) excluant chacun l'une des M pannes identifiées ω$_j$, on effectue au ii), pour chaque panne identifiée ω$_j$, une première mesure de dissimilarité entre ledit sous-vecteur forme x$_i$$^j$ et le premier vecteur prototype P1$_j$ associé à cette panne identifiée ω$_j$, de manière à obtenir une première valeur de similarité S1$_j$, et une seconde mesure de dissimilarité entre ledit sous-vecteur forme x$_i$$^j$ et le second vecteur prototype P2$_j$ associé à cette panne identifiée ω$_j$, de manière à obtenir une seconde valeur de similarité S2$_j$, puis au iii) on retient chaque première valeur de similarité S1$_j$ qui est inférieure à la seconde valeur de similarité S2$_j$ correspondante et qui correspond alors à une panne du matériel en panne (V$_i$).

4. Procédé selon la revendication 3, **caractérisé en ce qu'**au iii), en présence de premiers vecteurs prototypes P1$_j$ constitués, d'une part, d'un premier vecteur a1$_j$ dont chaque variable a1$_{jk}$ constituante est représentative de la valeur de variable x$_{ik}$ (k = 1 à N) qui est majoritaire dans les vecteurs formes x$_i$ (x$_i$ = (x$_{i1}$,.., x$_{iN}$)) considérés d'un premier sous-ensemble X1$_j$, qui correspondent à la panne ω$_j$, et d'autre part, d'un second vecteur ε1$_j$ dont chaque variable ε1$_{jk}$ constituante est représentative de la variation des valeurs de variable x$_{ik}$ du premier sous-ensemble X1$_j$ par rapport à la variable a1$_{jk}$ correspondante, et en présence de seconds vecteurs prototypes P2$_j$ constitués, d'une part, d'un premier vecteur a2$_j$ dont chaque variable a2$_{jk}$ constituante est représentative de la valeur de variable x$_{ik}$ qui est majoritaire dans les vecteurs formes x$_i$ considérés d'un second sous-ensemble X2$_j$, qui ne correspondent pas à la panne ω$_j$, et d'autre part, d'un second vecteur ε2$_j$ dont chaque variable ε2$_{jk}$ constituante est représentative de la variation des valeurs de variable x$_{ik}$ du second sous-ensemble X2$_j$ par rapport à la variable a2$_{jk}$ correspondante, on détermine chaque première valeur de similarité S1$_j$ en effectuant une somme pondérée des différences entre les variables de même indice k du sous-vecteur forme x$_i$$^j$ et du premier vecteur a1$_j$, et on détermine chaque seconde valeur de similarité S2$_j$ en effectuant une somme pondérée des différences entre les variables de même indice k du sous-vecteur forme x$_i$$^j$ et du premier vecteur a2$_j$.

**5.** Procédé selon la revendication 4, **caractérisé en ce que** chaque première mesure de dissimilarité est définie par la relation

$$ds1(x_i^{\,j}, P1_j) = \sum_{k\,/\,x_{ik}^{\,j}\in EP_j} \left( \ln \frac{1-\varepsilon 1_{jk}}{\varepsilon 1_{jk}} \right) \left| x_{ik}^{\,j} - a1_{jk} \right|$$ et **en ce que** chaque seconde mesure de dissimilarité est définie par la relation $ds2(x_i^{\,j}, P2_j) = \sum_{k\,/\,x_{ik}^{\,j}\in EP_j} \left( \ln \frac{1-\varepsilon 2_{jk}}{\varepsilon 2_{jk}} \right) \left| x_{ik}^{\,j} - a2_{jk} \right|$ .

**6.** Procédé selon l'une des revendications 1 à 5, **caractérisé en ce qu'**en cas de réception d'un fichier de données ($JDD_i$), on transforme ce dernier en un vecteur forme $x_i$ constitué d'un ensemble de N variables $x_{ik}$ ($x_i = (x_{i1}, ..., x_{iN})$, avec k = 1 à N) associées respectivement auxdits N codes de défaut $CD_{ik}$ pouvant survenir dans ledit matériel en panne ($V_i$).

**7.** Procédé selon l'une des revendications 1 à 6, **caractérisé en ce que** chaque variable $x_{ik}$ prend des première et seconde valeurs représentatives respectivement de la détection au moins une fois et de l'absence de détection du code de défaut $CD_{ik}$ dans ledit fichier ($JDD_i$).

**8.** Procédé selon la combinaison des revendications 4 et 7, **caractérisé en ce que** chaque sous-espace $EP_j$ regroupe

des variables $x_{ik}^{\,j}$ définies par la relation $x_{ik}^{\,j} = \left\{ x_{ik}, k = 1 \,\dot{a}\, N \,\middle|\, a1_{jk} = 1, (1-\varepsilon 1_{jk}) > \frac{1}{2} \right\}$ et donc ayant une première valeur représentative de la détection au moins une fois du code de défaut $CD_{ik}$ dans lesdits fichiers de données ($JDD_i$) correspondant à la panne $\omega_j$ avec une probabilité supérieure à 0,5 quand la panne identifiée $\omega_j$ est présente.

**9.** Procédé de diagnostic de pannes multiples survenues dans des matériels ($V_i$) et représentées par des fichiers de données ($JDD_i$) selon l'une quelconque des revendications précédentes, **caractérisé en ce que** la base de données est obtenue par un procédé de génération de base(s) de données représentatives de pannes survenues dans des matériels ($V_i$), consistant i) à stocker des fichiers de données ($JDD_i$) issus de matériels ($V_i$) et représentatifs de défauts survenus dans certains de leurs éléments, puis ii) à transformer chaque fichier de données ($JDD_i$) en un vecteur dit « forme » $x_i$, et iii) à construire pour chacune de M pannes identifiées $\omega_j$ des vecteurs dits « prototypes » à partir des vecteurs formes $x_i$, de manière à constituer une base de données X contenant des vecteurs prototypes représentatifs des M pannes identifiées $\omega_j$ et de M ensembles de M-1 pannes $\omega_{j'}$ (avec j'≠j) excluant chacun l'une des M pannes identifiées $\omega_j$.

**10.** Procédé de diagnostic de pannes multiples survenues dans des matériels ($V_i$) et représentées par des fichiers de données ($JDD_i$) selon la revendication 9, **caractérisé en ce qu'**au ii) on transforme chaque fichier de données ($JDD_i$) en un vecteur forme $x_i$ constitué d'un ensemble de N variables $x_{ik}$ ($x_i = (x_{i1}, ..., x_{iN})$, avec k = 1 à N) associées respectivement à N codes de défaut $CD_{ik}$ pouvant survenir dans le matériel ($V_i$) correspondant, chaque variable $x_{ik}$ pouvant prendre des première et seconde valeurs représentatives respectivement de la détection au moins une fois et de l'absence de détection du code de défaut $CD_{ik}$ dans ledit fichier ($JDD_i$).

**11.** Procédé de diagnostic de pannes multiples survenues dans des matériels ($V_i$) et représentées par des fichiers de données ($JDD_i$) selon la revendication 10, **caractérisé en ce qu'**au ii) on détermine parmi les vecteurs formes $x_i$ ceux qui ne correspondent qu'à une unique panne puis parmi ces derniers ceux qui correspondent à une panne $\omega_j$ (j = 1 à M) choisie parmi les M pannes identifiées $\omega_j$ de manière à regrouper pour chaque panne identifiée $\omega_j$ dans des premier $X1_j$ et second $X2_j$ sous-ensembles, les vecteurs formes $x_i$ qui respectivement correspondent et ne correspondent pas à cette panne $\omega_j$, et **en ce qu'**au iii) on construit pour chaque panne identifiée $\omega_j$ des premier $P1_j$ et second $P2_j$ vecteurs prototypes à partir des vecteurs formes $x_i$ qui sont respectivement contenus dans lesdits premier $X1_j$ et second $X2_j$ sous-ensembles, de manière à constituer une base de données de pannes X contenant M premiers vecteurs prototypes $P1_j$ représentatifs respectivement des M pannes $\omega_j$ identifiées et M seconds vecteurs prototypes $P2_j$ représentatifs respectivement de M ensembles de M-1 pannes $\omega_{j'}$ (avec j'≠j) excluant chacun l'une des M pannes identifiées $\omega_j$.

**12.** Dispositif (D) de diagnostic de pannes multiples survenues dans des matériels ($V_i$) et représentées par des fichiers de données ($JDD_i$), **caractérisé en ce qu'**il comprend des moyens de traitement (MT) agencés, en présence d'un vecteur dit « forme » $x_i$ ($x_i = (x_{i1},..., x_{iN})$) résultant de la transformation d'un fichier de données ($JDD_i$) issu d'un matériel en panne ($V_i$), i) pour projeter ledit vecteur forme $x_i$ dans des sous-espaces $EP_j$ (avec j = 1 à M) associés respectivement à M pannes simples identifiées $\omega_j$ pouvant survenir dans ledit matériel en panne ($V_i$) et constitués chacun par un sous-ensemble de variables $x_{ik}^j$ choisies parmi N variables ($x_{ik}$) associées respectivement à N codes de défaut $CD_{ik}$ pouvant survenir dans ledit matériel en panne ($V_i$), de manière à obtenir M sous-vecteurs formes $x_i^j$, puis ii) pour calculer des valeurs représentatives de similarités entre chaque sous-vecteur forme $x_i^j$ et des vecteurs dits « prototype » faisant partie d'une base de données de pannes simples X et représentatifs de la panne simple identifiée $\omega_j$ de même indice j et de l'ensemble de M-1 pannes simples $\omega_{j'}$ (avec j'≠j) excluant cette panne simple identifiée $\omega_j$, et iii) pour déduire desdites valeurs de similarité au moins une panne simple du matériel en panne ($V_i$).

**13.** Utilisation des procédé et dispositif (D) selon l'une des revendications précédentes dans le cas de matériels ($V_i$) de type véhicule automobile.

**Claims**

**1.** Method for diagnosing multiple failures occurring in equipment ($V_i$) and represented by data files ($JDD_i$), **charac-terized in that** it consists, in the presence of a so-called "form" vector $x_i$ ($x_i = (X_{i1}, ... , X_{iN})$) resulting from the transformation of data file ($JDD_i$) obtained from malfunctioning equipment ($V_i$), i) in projecting said form vector $x_i$ into subspaces $EP_j$ (with j = 1 to M) associated respectively with M single failures identified $\omega_j$ that can occur in said malfunctioning equipment ($V_i$) and each consisting of a subset of variables $x_{ik}^j$ chosen from N variables ($x_{ik}$) asso-ciated respectively with N fault codes $CD_{ik}$ that can occur in said malfunctioning equipment ($V_i$), so as to obtain M form subvectors $X_i^j$, then ii) in calculating values representative of similarities between each form subvector $x_i^j$ and so-called "prototype" vectors forming part of a single failure database X and representative of the single failure identified $\omega_j$ with the same index j and of all the M-1 single failures $\omega_{j'}$ (with j'≠j) excluding this identified single failure $\omega_{j'}$ and iii) in deducing from said similarity values, at least one single failure of the malfunctioning equipment ($V_i$).

**2.** Method according to Claim 1, **characterized in that**, in ii), said similarity values are the results of measurements of dissimilarity between each form subvector $x_i^j$ and corresponding prototype vectors.

**3.** Method according to Claim 2, **characterized in that**, in the presence of a failure database X containing M first prototype vectors $P1_j$ respectively representative of the M identified failures $\omega_j$ and M second prototype vectors $P2_j$ respectively representative of M sets of M-1 single failures $\omega_{j'}$ (with j'≠j) each excluding one of the M identified failures $\omega_j$, in ii), for each identified failure $\omega_j$, a first dissimilarity measurement is performed between said form subvector $x_i^j$ and the first prototype vector $P1_j$ associated with this identified failure $\omega_j$, so as to obtain a first similarity value $S1_j$, and a second dissimilarity measurement between said form subvector $x_i^j$ and a second prototype vector $P2_j$ asso-ciated with this identified failure $\omega_j$, so as to obtain a second similarity value $S2_j$, then, in iii), each first similarity value $S1_j$ which is less the corresponding second similarity value $S2_j$, and which then corresponds to a failure of malfunc-tioning equipment ($V_i$), is retained.

**4.** Method according to Claim 3, **characterized in that**, in iii), in the presence of first prototype vectors $P1_j$ consisting, on the one hand, of a first vector $a1_j$ of which each constituent variable $a1_{jk}$ is representative of the variable value $x_{ik}$ (k = 1 to N) that is in the majority in the relevant form vectors $x_i$ ($x_i = (x_{i1}, ... , x_{iN})$) of a first subset $X1_j$, which corresponds to the failure $\omega_j$, and on the other hand, of a second vector $\varepsilon1_j$ of which each constituent variable $\varepsilon1_{jk}$ is representative of the variation of the variable values $x_{ik}$ of the first subset $X1_j$ relative to the corresponding variable $a1_{jk}$, and in the presence of second prototype vectors $P2_j$ consisting, on the one hand, of a first vector $a2_j$ of which each constituent variable $a2_{jk}$ is representative of the variable value $x_{jk}$ which is in the majority in the relevant form vectors $x_i$ of a second subset $X2_j$, which does not correspond to the failure $\omega_j$, and on the other hand, of a second vector $\varepsilon2_j$ of which each constituent variable $\varepsilon2_{jk}$ is representative of the variation of the variable values $x_{jk}$ of the second subset $X2_j$ relative to the corresponding variable $a2_{jk}$, each first similarity value $S1_j$ is determined by calculating a weighted sum of the differences between the variables of the same index k of the form subvector $x_i^j$ and of the first vector $a1_j$, and each second similarity value $S2_j$ is determined by calculating a weighted sum of the differences between the variables of the same index k of the form subvector $x_ij$ and of the first vector $a2_j$.

**5.** Method according to Claim 4, **characterized in that** each first dissimilarity measurement is defined by the relation

$$ds1(x_i^j, P1_j) = \sum_{k/x_{ik}^j \in EP_j}\left(\ln\frac{1-\varepsilon1_{jk}}{\varepsilon1_{jk}}\right)\left|x_{ik}^j - a1_{jk}\right|$$ and **in that** each second dissimilarity measurement is defined

by the relation $$ds2(x_i^j, P2_j) = \sum_{k/x_{ik}^j \in EP_j}\left(\ln\frac{1-\varepsilon2_{jk}}{\varepsilon2_{jk}}\right)\left|x_{ik}^j - a2_{jk}\right|.$$

6. Method according to one of Claims 1 to 5, **characterized in that**, if a data file ($JDD_i$) is received, said file is transformed into a form vector $x_i$ consisting of a set of N variables $X_{ik}$ ($x_i = (x_{i1},..., x_{iN})$, with k = 1 to N) associated respectively with said N fault codes $CD_{ik}$ that can occur in said malfunctioning equipment ($V_i$).

7. Method according to one of Claims 1 to 6, **characterized in that** each variable $x_{ik}$ takes first and second values respectively representative of the detection at least once and of the absence of detection of the fault code $CD_{ik}$ in said file ($JDD_i$).

8. Method according to the combination of Claims 4 and 7, **characterized in that** each subspace $EP_j$ contain variables $x_{ik}^j$ defined by the relation and therefore having a first value representative of the detection at least once of the fault code $CD_{ik}$ in said data files ($JDD_i$) corresponding to the failure $\omega_j$ with a probability greater than 0.5 when the identified failure $\omega_j$ is present.

9. Method for diagnosing multiple failures occurring in equipment ($V_i$) and represented by data files ($JDD_i$) according to any one of the preceding claims, **characterized in that** the database is obtained by a method of generating databases representative of failures occurring in equipment ($V_i$), consisting i) in storing data files ($JDD_i$) obtained from equipment ($V_i$) and representative of faults occurring in certain of their component elements, then ii) in transforming each data file ($JDD_i$) into a so-called "form" vector $x_i$, and iii) in constructing, for each of M identified failures $\omega_j$, so-called "prototype" vectors from the form vectors $x_i$, so as to construct a database X containing prototype vectors representative of the M identified failures $\omega_j$ and of M sets of M-1 failures $\omega_{j'}$ (with j'≠j) each excluding one of the M identified failures $\omega_j$.

10. Method for diagnosing multiple failures occurring in equipment ($V_i$) and represented by data files ($JDD_i$) according to Claim 9, **characterized in that**, in ii), each data file ($JDD_i$) is transformed into a form vector $x_i$ consisting of a set of N variables $x_{ik}$ ($x_i = (x_i,..., x_{iN})$, with k = 1 to N) respectively associated with N fault codes $CD_{ik}$ that can occur in the corresponding equipment ($V_i$), each variable $x_{ik}$ being able to take first and second values respectively representative of the detection at least once and of the absence of detection of the fault code $CD_{ik}$ in said file ($JDD_i$).

11. Method for diagnosing multiple failures occurring in equipment ($V_i$) and represented by data files ($JDD_i$) according to Claim 10, **characterized in that**, in ii), there are determined, from the form vectors $x_i$, those that correspond only to a single failure then, from the latter, those that correspond to a failure $\omega_j$ (j = 1 to M) chosen from the M identified failures $\omega_j$ so as to group together, for each identified failure $\omega_j$, in first $X1_j$ and second $X2_j$ subsets, the form vectors $x_i$ which respectively correspond and do not correspond to this failure $\omega_j$, and **in that**, in iii), first $P1_j$ and second $P2_j$ prototype vectors are constructed, for each identified failure $\omega_j$, from form vectors $x_i$ which are respectively contained in said first $X1_j$ and second $X2_j$ subsets, so as to construct a failure database X containing M first prototype vectors $P1_j$ respectively representative of the M identified failures $\omega_j$ and M second prototype vectors $P2_j$ respectively representative of M sets of M-1 failures $\omega_{j'}$ (with j'≠j) each excluding one of the M indentified failures $\omega_j$.

12. Device (D) for diagnosing multiple failures occurring in equipment ($V_i$) and represented by data files ($JDD_i$), **characterized in that** it comprises processing means (MT) arranged, in the presence of a so-called "form" vector $x_i$ ($x_i = x_{i1},..., x_{iN}$)) resulting from the transformation of a data file ($JDD_i$) obtained from malfunctioning equipment ($V_i$), i) to project said form vector $x_i$ into subspaces $EP_j$ (with j = 1 to M) respectively associated with M identified single failures $\omega_j$ that can occur in said malfunctioning equipment ($V_i$) and each consisting of a subset of variables $x_{ik}^j$ chosen from N variables ($x_{ik}$) respectively associated with N fault codes $CD_{ik}$ that can occur in said malfunctioning equipment ($V_i$), so as to obtain M form subvectors $x_i^j$, then ii) to calculate values representative of similarities between each form subvector $x_i^j$ and so-called "prototype" vectors forming part of a single failure database X and representative of the identified single failure $\omega_j$ of the same index j and of the set of M-1 single failures $\omega_{j'}$ (with j'≠j) excluding this identified single failure $\omega_j$, and iii) to deduce from said similarity values at least one single failure of the malfunctioning

equipment ($V_i$).

13. Use of the method and device (D) according to one of the preceding claims in the case of motor vehicle-type equipment ($V_i$).

**Patentansprüche**

1. Verfahren für die Diagnose mehrerer Störungen, die in Hardware-Einheiten ($V_i$) auftreten und durch Datendateien ($JDD_i$) repräsentiert werden, **dadurch gekennzeichnet, dass** es bei Vorliegen eines so genannten "Form"-Vektors $x_i$ ($x_i = (x_{i1}, ..., x_{iN})$), der sich aus der Transformation einer von einer ausgefallenen Hardware-Einheit ($V_i$) stammenden Datendatei ($JDD_i$) ergibt, darin besteht, i) diesen Formvektor $x_i$ auf Unterräume $EP_j$ (mit j = 1 bis M) zu projizieren, die M identifizierten einfachen Störungen $\omega_j$ zugeordnet sind, die in der ausgefallenen Hardware-Einheit ($V_i$) auftreten können und jeweils durch eine Untereinheit von Variablen $x_i^j$ gebildet sind, die aus N Variablen ($x_{ik}$) gewählt sind, die jeweils N Fehler-Codes $CD_{ik}$ zugeordnet sind, die in der ausgefallenen Hardware-Einheit ($V_i$) auftreten können, derart, dass M Form-Untervektoren $x_i^j$ erhalten werden, dann ii) Vektoren zu berechnen, die Ähnlichkeiten repräsentieren zwischen jedem Form-Untervektor $x_i^j$ und so genannten "Prototyp"-Vektoren, die einen Teil einer Datenbasis X einfacher Störungen bilden und die identifizierte einfache Störung $\omega_j$ mit dem gleichen Index j und die Gesamtheit von M - 1 einfachen Störungen $\omega_{j'}$ (mit j' ≠ j ), die die identifizierte einfache Störung $\omega_j$ nicht enthalten, darstellen, und iii) aus diesen Ähnlichkeitsvektoren wenigstens eine einfache Störung der ausgefallenen Hardware-Einheit ($V_i$) abzuleiten.

2. Verfahren nach Anspruch 1, **dadurch gekennzeichnet, dass** in ii) die Ähnlichkeitsvektoren die Ergebnisse von Messungen einer Unähnlichkeit zwischen jedem Form-Untervektor $x_i^j$ und entsprechenden Prototyp-Vektoren sind.

3. Verfahren nach Anspruch 2, **dadurch gekennzeichnet, dass** bei Vorliegen einer Störungs-Datenbasis X, die M erste Prototyp-Vektoren $P1_j$, die jeweils M identifizierte Störungen $\omega_j$ repräsentieren, und M zweite Prototyp-Vektoren $P2_j$, die jeweils M Gesamtheiten von M - 1 einfachen Störungen $\omega_{j'}$ (mit j' ≠ j), die jeweils eine der M identifizierten Störungen $\omega_j$ nicht enthalten, darstellen, enthält, in ii) für jede identifizierte Störung $\omega_j$ eine erste Messung einer Unähnlichkeit zwischen dem Form-Untervektor $x_i^j$ und dem ersten Prototyp-Vektor $P1_j$, der dieser identifizierten Störung $\omega_j$ zugeordnet ist, ausgeführt wird, derart, dass ein erster Ähnlichkeitswert $S1_j$ erhalten wird, und eine zweite Messung einer Unähnlichkeit zwischen dem Form-Untervektor $x_i^j$ und dem zweiten Prototyp-Vektor $P2_j$, der dieser identifizierten Störung $\omega_j$ zugeordnet ist, ausgeführt wird, derart, dass ein zweiter Ähnlichkeitswert $S2_j$ erhalten wird, und dann in iii) jeder erste Ähnlichkeitswert $S1_j$, der kleiner als der entsprechende zweite Ähnlichkeitswert $S2_j$ ist und daher einer Störung der ausgefallenen Hardware-Einheit ($V_i$) entspricht, beibehalten wird.

4. Verfahren nach Anspruch 3, **dadurch gekennzeichnet, dass** in iii) bei Vorliegen erster Prototyp-Vektoren $P1_j$, die einerseits aus einem ersten Vektor $a1_j$ gebildet sind, wovon jede konstitutive Variable $a1_{jk}$ den Wert der Variable $x_{ik}$ (k = 1 bis N) repräsentiert, die in den betrachteten Form-Vektoren $x_i$ ($xi = (x_{i1}, ..., x_{iN})$) einer ersten Untergesamtheit $X1_j$, die der Störung $\omega_j$ entspricht, die Mehrheit bildet, und andererseits aus einem zweiten Vektor $\varepsilon1_j$ gebildet sind, wovon jede konstitutive Variable $\varepsilon1_{jk}$ die Veränderung der Werte der Variable $x_{ik}$ der ersten Untergesamtheit $X1_j$ in Bezug auf die entsprechende Variable $a1_{jk}$ repräsentiert, und bei Vorliegen zweiter Prototyp-Vektoren $P2_j$, die einerseits aus einem ersten Vektor $a2_j$ gebildet sind, wovon jede konstitutive Variable $a2_{jk}$ den Wert der Variable $x_{ik}$ repräsentiert, die in den betrachteten Form-Vektoren $x_i$ einer zweiten Untergesamtheit $X2_j$, die nicht der Störung $\omega_j$ entspricht, die Mehrheit bildet, und andererseits aus einem zweiten Vektor $\varepsilon2_j$ gebildet sind, wovon jede konstitutive Variable $\varepsilon2_{jk}$ die Veränderung der Werte der Variable $x_{ik}$ der zweiten Untergesamtheit $X2_j$ in Bezug auf die entsprechende Variable $a2_{jk}$ repräsentiert, jeder erste Ähnlichkeitswert $S1_j$ bestimmt wird, indem eine gewichtete Summe der Differenzen zwischen den Variablen mit demselben Index k des Form-Untervektors $x_i^j$ und dem ersten Vektor $a1_j$ gebildet wird, und jeder zweite Ähnlichkeitswert $S2_j$ bestimmt wird, indem eine gewichtete Summe der Differenzen zwischen den Variablen mit demselben Index k des Form-Untervektors $x_i^j$ und dem ersten Vektor $a2_j$ gebildet wird.

5. Verfahren nach Anspruch 4, **dadurch gekennzeichnet, dass** jede erste Messung einer Unähnlichkeit durch die folgende Beziehung definiert ist: $\mathrm{ds1}\left(x_i^{\ j}, \mathrm{P1}_j\right) = \sum_{k:\, x_{ik}^{\ j} \in \mathrm{EP}_j} \left( \ln \frac{1 - \varepsilon1_{jk}}{\varepsilon1_{jk}} \right) \left| x_{ik}^{\ j} - a1_{jk} \right|$ und

dass jede zweite Messung einer Unähnlichkeit durch die folgende Beziehung definiert ist:

$$ds2\left(x_i{}^j, P2_j\right) = \sum_{k:x_{ik}{}^j \in EP_j} \left(\ln \frac{1 - \varepsilon2_{jk}}{\varepsilon2_{jk}}\right)\left|x_{ik}{}^j - a2_{jk}\right|$$

6. Verfahren nach einem der Ansprüche 1 bis 5, **dadurch gekennzeichnet, dass** im Fall des Empfangs einer Datendatei ($JDD_i$) diese Letztere in einen Form-Vektor $x_i$ transformiert wird, der aus einer Gesamtheit von N Variablen $x_{ik}$ ($x_i = (x_{i1}, ..., x_{iN})$, mit k = 1 bis N), die den N Fehler-Codes $CD_{ik}$ zugeordnet sind, die in der ausgefallenen Hardware-Einheit ($V_i$) auftreten können, gebildet ist.

7. Verfahren nach einem der Ansprüche 1 bis 6, **dadurch gekennzeichnet, dass** jede Variable $x_{ik}$ einen ersten und einen zweiten Wert annimmt, der die wenigstens einmalige Detektion bzw. das Fehlen einer Detektion des Fehler-Codes $CD_{ik}$ in der Datei ($JDD_i$) repräsentiert.

8. Verfahren nach der Kombination der Ansprüche 4 und 7, **dadurch gekennzeichnet, dass** jeder Unterraum $EP_j$ die Variablen $x_{ik}{}^j$ zusammenfasst, die durch die Beziehung

$$x_{ik}{}^j = \left\{ x_{ik}, k = 1 \text{ bis } N \middle| a1_{jk} = 1, \left(1 - \varepsilon1_{jk}\right) > \frac{1}{2} \right\}$$ definiert sind und daher einen ersten Wert haben, der die wenigstens einmalige Detektion des Fehler-Codes $CD_{ik}$ in den Datendateien ($JDD_i$), die der Störung $\omega_j$ entsprechen, mit einer Wahrscheinlichkeit repräsentiert, die größer als 0,5 ist, wenn die identifizierte Störung $\omega_j$ vorliegt.

9. Verfahren für die Diagnose mehrerer Störungen, die in Hardware-Einheiten ($V_i$) auftreten und durch Datendateien ($JDD_i$) repräsentiert werden, nach einem der vorhergehenden Ansprüche, **dadurch gekennzeichnet, dass** die Datenbasis durch ein Verfahren zum Erzeugen einer oder mehrerer Datenbasen erhalten wird, die Störungen repräsentieren, die in Hardware-Einheiten ($V_i$) auftreten, das darin besteht, i) Datendateien ($JDD_i$) zu speichern, die von Hardware-Einheiten ($V_i$) stammen und Fehler repräsentieren, die in Bestimmten ihrer Elemente auftreten, dann ii) jede Datendatei ($JDD_i$) in einen so genannten "Form"-Vektor $x_i$ zu transformieren und iii) für jede der identifizierten M Störungen $\omega_j$ so genannte "Prototyp"-Vektoren ausgehend von Formvektoren $X_i$ zu konstruieren, derart, dass eine Datenbasis X gebildet wird, die Prototyp-Vektoren enthält, die die N identifizierten Störungen $\omega_j$ und M Gesamtheiten von M - 1 Störungen $\omega_{j'}$ (mit j' ≠ j), die jeweils eine der M identifizierten Störungen $\omega_j$ nicht enthalten, repräsentieren.

10. Verfahren für die Diagnose mehrerer Störungen, die in Hardware-Einheiten ($V_i$) auftreten und durch Datendateien $JDD_i$ repräsentiert werden, nach Anspruch 9, **dadurch gekennzeichnet, dass** in ii) jede Datendatei ($JDD_i$) in einen Formvektor $x_i$ transformiert wird, der aus einer Gesamtheit von N Variablen $x_{ik}$ ($x_i = (x_{i1}, ..., x_{iN})$, mit k = 1 bis N) gebildet ist, die jeweils N Fehler-Codes $CD_{ik}$ zugeordnet sind, die in der entsprechenden Hardware-Einheit ($V_i$) auftreten können, wobei jede Variable $x_{ik}$ einen ersten und einen zweiten Wert annehmen kann, die die wenigstens einmalige Detektion bzw. das Fehlen einer Detektion des Fehler-Codes $CD_{ik}$ in der Datei ($JDD_i$) repräsentieren.

11. Verfahren für die Diagnose mehrerer auftretender Störungen in Hardware-Einheiten ($v_i$), die durch Datendateien ($JDD_i$) repräsentiert werden, nach Anspruch 10, **dadurch gekennzeichnet, dass** in ii) unter den Form-Vektoren $x_i$ jene bestimmt werden, die nur einer einzigen Störung entsprechen, dann unter diesen Letzteren jene bestimmt werden, die einer Störung $\omega_j$ (j = 1 bis M) entsprechen, die unter den M identifizierten Störungen $\omega_j$ gewählt werden, derart, dass für jede identifizierte Störung $\omega_j$ in der ersten Untereinheit $X1_j$ und in der zweiten Untereinheit $X2_j$ die Form-Vektoren $x_i$, die dieser Störung $\omega_j$ entsprechen bzw. nicht entsprechen, zusammengefasst werden, und dass in iii) für jede identifizierte Störung $\omega_j$ erste Prototyp-Vektoren $P1_j$ und zweite Prototyp-Vektoren $P2_j$ anhand der Form-Vektoren $x_i$ konstruiert werden, die in der ersten Untereinheit $X1_j$ bzw. in der zweiten Untereinheit $X2_j$ enthalten sind, derart, dass eine Datenbasis X von Störungen gebildet wird, die M erste Prototyp-Vektoren $P1_j$ enthält, die jeweils M identifizierte Störungen $\omega_j$ repräsentieren, und M zweite Prototyp-Vektoren $P2_j$ enthält, die jeweils M Gesamtheiten von M - 1 Störungen $\omega_{j'}$ (mit j' ≠ j), die jeweils eine der M identifizierten Störungen $\omega_j$ nicht enthalten, repräsentieren.

12. Vorrichtung (D) für die Diagnose von mehreren auftretenden Störungen in Hardware-Einheiten ($V_i$), die durch Da-

tendateien (JDD$_i$) repräsentiert werden, **dadurch gekennzeichnet, dass** sie Verarbeitungsmittel (MT) enthält, die dazu ausgelegt sind, bei Vorliegen eines so genannten "Form"-Vektors x$_i$ (x$_i$ = (x$_{i1}$, ..., x$_{iN}$)), der sich aus der Transformation einer von einer ausgefallenen Hardware-Einheit (V$_i$) stammenden Datendatei (JDD$_i$) ergibt, i) diesen Form-Vektor x$_i$ auf Unterräume EP$_j$ (mit j = 1 bis M) zu projizieren, die M identifizierten einfachen Störungen $\omega_j$ zugeordnet sind, die in der ausgefallenen Hardware-Einheit (V$_i$) auftreten können, und jeweils durch eine Untergesamtheit von Variablen x$_{ik}^j$ gebildet sind, die aus N Variablen (x$_{ik}$) gewählt sind, die N Fehler-Codes CD$_{ik}$ zugeordnet sind, die in der ausgefallenen Hardware-Einheit (V$_i$) auftreten können, derart, dass M Form-Untervektoren x$_i^j$ erhalten werden, dann ii) Vektoren zu berechnen, die Ähnlichkeiten zwischen jedem Form-Untervektor x$_i^j$ und so genannten "Prototyp"-Vektoren repräsentieren, die einen Teil einer Datenbasis X für einfache Störungen bilden und die identifizierte einfache Störung $\omega_j$ mit demselben Index j und die Gesamtheit von M - 1 einfachen Störungen $\omega_{j'}$ (mit j' ≠ j), die diese identifizierte einfache Störung $\omega_j$ nicht enthalten, repräsentieren, und iii) aus den Ähnlichkeitswerten wenigstens eine einfache Störung der ausgefallenen Hardware-Einheit (V$_i$) abzuleiten.

**13.** Verwendung des Verfahrens und der Vorrichtung (D) nach einem der vorhergehenden Ansprüche im Fall von Hardware-Einheiten (V$_i$) des Kraftfahrzeugtyps.

Figure unique

**RÉFÉRENCES CITÉES DANS LA DESCRIPTION**

**Documents brevets cités dans la description**

- EP 1418481 A

- WO 2006127051 A